# EUROPEAN PATENT APPLICATION

(11) **EP 3 543 577 A1**
(43) Date of publication of application: **25.09.2019**
(21) Application number: 18215789.1
(22) Date of filing: 27.01.2009
(51) Int. Cl.: F16L 21/04, F16L 21/08, F16L 25/14

(54) **PIPE JOINT FOR CONNECTING PIPES OF DIFFERENT MATERIALS**

(30) Priority: 28.01.2008 PT 2008103946
(62) Divisional of application: 09001067.9
(71) Applicant: FUCOLI-SOMEPAL FUNDIÇÃO DE FERRO, S.A., 3001-906 Coimbra (PT)
(72) Inventor: da Fonseca Mendes Pereira, Luis Miguel, 3001-906 Coimbra (PT)
(74) Representative: Pires de Sousa, Marco

(57) **Abstract**

This invention refers to a joint, the purpose of which is to couple pipes, guaranteeing leak tightness and preventing the pipes from sliding or becoming loose. It applies to engineering, more specifically to hydraulics.

This invention provides one or more ends for pipe insertion and includes a main body (1), clamping ring(s) (2), bolts, nuts and washers (3), and a sealing and locking part formed by an elastomer sealing ring (4) and by several gripper supports that fit into each other forming a closed ring (7). Alternatively, the grippers can be connected by one or several elastomer ribbed rings forming a closed ring (7).

The advantage of this invention is that it can be applied in pipes of different materials and diameters, in a wide variety of diameters and materials without losing its capacity to resist high pressures, and to allow a considerable deflection in the symmetry axle.

## Description

### Technical field of the invention

This invention applies to the field of civil and mechanical engineering, more specifically to hydraulics.

### Summary of the invention

This invention is a coupling device to connect pipes, preventing fluid leakages and the pipes from sliding or becoming loose, and its main advantages are that it can be applied in pipes with different types of materials and different diameters, it can be used with a wide variety of diameters, resisting simultaneously high pressures, allowing a considerable deflection in the symmetry axle.

With this invention, we aim to seal and lock the pipes without causing any damage to the piping system, and to provide a wide usage, in other words, the same device can be used in any piping without having to change or remove any of its components, if the pipes are replaced by other pipes with different materials.

This invention allows a wide number of applications, i.e. it can be reused in a practically endless number of times, even when it is applied in areas with major vibration and where the traction material is subject to effort.

This invention is remarkable because all the sealing and locking system components interact smoothly with each other, making all the elements behave as a single block, which is at the same time very flexible due to the framing of the milled rivet (9) in the gripper (8) and by the guided groove between the gripper (8) and the gripper support (5), these supports being connected to each other by locking tabs (10) and "tolerance space", or alternatively, by ribbed rings (6), allowing a smooth sliding effect and guaranteeing, at the same time, an effective coupling.

### Background of the invention

The technological development in the past few decades, more specifically in the last two decades, has affected all areas of human life. This is also visible in the pipes used for fluid, gas and solid flows. In practice, pipes have developed not only in the materials used but also in the pressure levels they have to bear, resistance to corrosion, thickness, roughness, weights, drawings, among others. However, the appearance of these new pipes did not mean that the pipes already in use for several years and in perfect working condition were to disappear. On the other hand, the advantages of the new pipes lead us to accept and use them even more. While new pipes are being applied more often, is it necessary to connect them to the already existing ones that have been operating for several years, in fact, for decades.

At the same time, the increasing construction of buildings in urban areas means that there is a greater need to inject fluids in the pipes at higher pressures. This factor implies a greater effort by the pipes and the fittings connecting them, not only in the sealings but also in the locking systems. The fluid pumping areas are frequently seen as the most critical points. However, we have seen that the passage of pipes near intense car traffic areas is also seen as a rather worrying and critical factor in terms of pipe sealing and locking.

The development of a coupling device, used in civil construction, is a result of the need to connect pipes with different diameters and materials, to guarantee leak tightness and their locking, to allow the passage and flow of fluids, gases and solids. In addition to this, we have to guarantee that this joint remains functional for a long time, to avoid maintenance procedures, which are expensive and inconvenient. The parts that form the piping system must, therefore, be replaced effortless and, if necessary, be replaced with other types of materials without having to replace the existing joint or any of its components, and without having to purchase a new joint, provided that the external diameter of the new pipe, which will form the ducts, fits into the tolerance space of the existing joint.

There are several solutions in this field. However, many of these offer a device that can only be applied to pipes with similar diameter or pipes with different diameters; yet, these solutions do not allow a tolerance space in the external diameter of the pipe.

More recently, multimaterials joints have appeared in the market, allowing the connection of pipes with different diameters within a specific tolerance space. However, these do not allow the locking of the pipe.

There are several patented joints that connect pipes or other drainage elements (knee joints, "T" joints, valves, pumps, among others), without, however, offering the characteristics and advantages of this invention.

WO01096774 discloses a joint formed by a body, clamping rings and a sealing and locking body, the latter being formed by a sealing ring, gripper support, and grippers that contain an abrasive material glued onto the gripper's surface. However, due to the material used and due to the fixation process, this abrasive, in practice, is not effective when it has to be re-used without the replacement of any of its components, in a similar or different pipe, thus offering a limited number of operations and rendering one of the fundamental requirements of this type of device impractible: its durability and life expectancy. This invention does not use an abrasive or any other traction system applied on the surface in terms of fixation, but a system of rivets (9) with milled heads, tempered and zinc-coated, fitted into the gripper (8), and is thus able to operate more often, and never becomes loose from the gripper. Another fundamental difference of the invention herein proposed regarding the provisions contained in WO01096774 refers to the weak connection between the gripper and the gripper support presented in the document, making it easier to free the gripper from the support and forcing the repositioning of the grippers, or at least of its re-fitting, when performing maintenance operations to the pipe, with inevitable and expensive loss of time. On the contrary, in this invention, the gripper and the gripper support will not disconnect in a simple way as the gripper support (5) contains a cavity to house and fix in two axles the gripper (8), allowing, at the same time, the gripper to slide (8) along a single axle, and guaranteeing the fixation of the gripper (8) to the gripper support (5), even when pipes vibrate and rotate. Another important difference is that the grippers (8) in this invention act and react independently as the connecting point takes place in the conical support along two axles with the gripper support (5), and never with the attached grippers. This new concept whereby the grippers are independent allows the gripper traction effort to adapt to the exact point of the pipe where they are connected and to perform its function. It also allows the joint to be tolerant when enduring greater deflection degrees of the pipes. As such, the fact that the grippers work independently from each other, forces, for example, in one of the sides of the pipes, the grippers to slide along their conical axle in the gripper supports to perform the traction function, and it does not imply that all the grippers move in the same direction. Therefore, in one of the external diameter points of the pipe, we can have the grippers acting to their maximum traction effort, running along the support's conical guide, while on another point of the external diameter of the pipe the gripper has a totally different behaviour as it is not forced to react in tune with the adjacent grippers, but rather with the traction it is subject to in that specific point in the pipe.

In addition to the limitations already mentioned there is yet another limitation related to the diameters and pressures that guarantee the locking of the pipes. The DN 50 to DN 150 diameters allow a usage of 1.6 MPa locked. However, in the diameters between DN 175 to DN 300, we can only use a 1.0 MPa locked usage or 1.6 MPa without locking. This is a major limitation as most pipes operate at 1.6 MPa.

Another limitation of the joints known so far is that these only operate in pipes with diameters up to DN 300, which, as there is a considerable number of usages of pipes with diameters over DN 300, is probably due to the fact that these already known joints prove to be ineffective with larger diameters. On the contrary, the solution presented by this invention has a fixation device to the base of the rivet (9) with a milled head, tempered and zinc-coated, fitted into the gripper (8), the gripper having a fitting over the support (5), and sliding over it and being fixed with a pressure tab. By offering a more efficient device, we are able to guarantee the sealing and locking in pipes with a diameter over DN 300.

These characteristics allow the device of this invention to offer several advantages with relation to the device shown in WO0196774: the milled rivet (9) of fixation fitted into the gripper (8) allows an increased number of usages, including different types of materials, such as PVC (Polyvinyl Chloride), PE (Polyethylene), steel, cast iron, and asbestos cement, among others. On the other hand, the gripper support (5), according to this invention, allows the guided sliding movement of the gripper (8), which increases the functional stability of the device, even in situations where the connected pipes rotate. In addition to this, the angle of the gripper support (5) was especially designed and developed to offer a wider angle in the area where it meet s the ring (2). This allows us to obtain a reduced torque in the pipe sealing and locking functions.

An additional special care shown in the development of this invention lies in the way the gripper supports (5) are connected to each other. We have developed a connection using locking tabs (10), and with tolerance space coupled inside the gripper support and connected transversally to the traction effort caused by the pipe to be applied onto the joint. As the tolerance space allows the entire assembly to couple pipes with different external diameters, by reducing or increasing the spacing between the gripper supports, we also reduce or increase the interior useful diameter for the coupling of the pipe. On the other hand, the locking tab (10) does not allow the gripper supports (5) to become detached, forming a cohesive and tolerant group. The location and direction of the locking tabs has also been taken into great consideration (10) with tolerance space between the gripper supports (5). Therefore, the fact that the locking tab and the tolerance space are placed very close to the external wall of the pipe we wish to couple makes the effort subjected to this connection much smaller than when compared to a location at a more external level, where the effort supported by the connection would be multiplied by distensions between the gripper supports. The location of the locking tab with the tolerance space was also designed to protect this tolerance system from incoming dirt, sand or other elements foreign to the group. The eventual presence of dirt, sand or other foreign elements in this specific point of the joint would harm its future operation, as the tolerance ranges that the joint would reach would not be the same. On the other hand, a crucial and distinct factor regarding other inventions we already know is that the couplings of the locking tabs with the tolerance space are done transversally to the effort caused by the pipe traction. This design also offers greater harmony and "robustness" to the entire group, so that it won't become detached during assembly and disassembly of the pipe, even when the existing tolerance between the main body of the joint (1) and the locking ring (2) is too large.

In the joint published in WO0196774, the connection between the gripper supports is, on the one hand, done in a more exterior and open level relative to the external diameter of the pipe, which will leverage the effort which the connection is subject to and will expose the tolerance system to the incoming dirt, sand and other foreign elements, which is detrimental to its future operation; on the other hand, the interconnection between the gripper supports is done in the same direction as the pipe traction effort. Because of this fact, in disassembly procedures, where we have to increase the spacing between the body of the joint and the external ring, the gripper supports can become detached, causing inconvenient and unnecessary loss of time during its re-assembly.

Therefore, a joint according to the invention makes the operation at high pressures possible, around 1.6 MPa, allowing for a better, more stable and re-usable sealing and locking in comparison to the joint published in WO0196774, and enabling also the optimization of the tolerance ranges of different diameters between pipes to be connected, in other words, it allows the operation in larger diameter ranges without losing the referred advantages.

The previously mentioned advantages also apply to the alternative design, as the milled rivet is also inlaid and the coinciding angles are the same as the ones used in the previous version.

EP0974780 discloses a coupling device and a manufacturing method for a perforated metal band, with the band showing blade-shaped ridges for the same device, and differs from this invention and from the invention mentioned in WO01096774 as it presents this metal band, which reinforces the connection to the pipes and allows the coupling to withstand several pressures. This invention is different from the invention in EP0974780 as it does not contain the said perforated metal band with blade-shaped ridges, maintaining the resistance to high pressures through other solutions other than the use of the referred perforated metal band with blade-shaped ridges.

This invention has, in its preferred form, grippers (8) with a sliding and conical support, in a single axle, that support (9) inlaid milled rivets. It is different from all the inventions contained in all other previous documents in that there is a greater emphasis on the stability of the gripper as it shows a new concept of connection with the gripper support (5), which is not shown in any of the other documents. Further to what has already been mentioned, this invention shows a new concept of traction, through the use of a milled rivet (9) inlaid in the gripper, which makes it more stable, lasting and efficient in its various uses and resistance to high pressures, without the risk of damaging the pipes. The connection between the gripper supports is done at a more protected level against external dirt, which increases the guarantee that the joint will work perfectly in the future.

Alternatively, this invention can also be presented with grippers connected among themselves by means of one or several ribbed elastomer rings (6), and those grippers also include inlaid milled rivets. This is also a new fitting concept which is not developed in any other document referred previously in this section.

Regarding EP097478 (as well as the EP0794378 document published before), we must note that the devices published are different according to the pipe materials we wish to connect, i.e., this is not a universal device. As such, when the intention is to connect a PE pipe with another different material, the document suggests a type of joint. However, if we have to change one of the pipes, for example the second pipe, by another PE pipe, we also have to replace the said joint or then replace the type of metal band used in that joint, thus bearing greater inconvenience and higher costs. The fact is that the metal bands suggested in this document are, in practice, different according to the type of pipe material used.

In addition to this, the suggested metal band, showing blade-shaped ridges, can cause irreparable damages to the plastic or flexible pipes, as is the case of the PE and PB pipes, as the blade shape of the bands and their material make them function like a blade especially when the joint's traction effort is put to use. This is one of the major concerns of the companies responsible for managing and maintenance of pipes and because of it many have already introduced guidelines that specify a maximum limit for the dimension of these metal blades, especially when we want then to be applied to PE, PB pipes and the like.

In short, the joint of this invention shows innovative features in terms of the fixation device such as in terms of the material used to guarantee that fixation (milled rivet in zinc-coated tempered steel, inlaid in the gripper), and to the inlay of the gripper and the gripper support, which guarantee the universality characteristic of the joint, even in connections using pipes with different diameters and materials, a high durability, high stability, even when subjected to rotational movements, an increased mechanical traction an excellent sealing and locking capacity, able to support working pressures of about 2.5 MPa and en-line pressures of about 1.6 MPa in all the dimension ranges for joints proposed by this invention. The way the gripper supports are interconnected, in both models here shown, allows a larger tolerance of diameters of pipes to be connected, and an adequate split of effort over all the joint parts.

This invention is different from the joints already mentioned in that it shows a greater interaction capacity among all the components of the sealing and locking system. When the joint is properly mounted, all the elements work in unison and its components will never become detached provided they are mounted and applied correctly. This helps all the elements work as a single block, which is at the same time very flexible and with some independence. This is possible through the inlay of the milled rivet (9) in the gripper (8), through the independence of the grippers (8) among themselves, by the guided inlay between the gripper (8) and the gripper support (5), and these supports are interconnected by means of locking tabs (10), "with a tolerance space" which enables a smooth sliding movement, guaranteeing, at the same time, an effective joint. This assembly works so tightly that even the sudden rotational movements over its symmetry axle, during assembly or caused by land slides, subsidence or ground movements in which the pipes can suffer rotations or deviations in its trajectory will not cause any disassembly of any of the group's elements.

Furthermore, the joint's sealer has a reinforced profile and a design developed in such a way as to prevent tearing caused by the sliding movement of the joint itself during the assembly process, and a wider supporting base that ensures better sealing of the pipes even if they are made of rugged, and imperfect materials, for example asbestos cement and cast iron.

### General description of the invention

This invention refers to a multimaterials joint with locking grippers to couple pipes used for liquids, gases or solids.

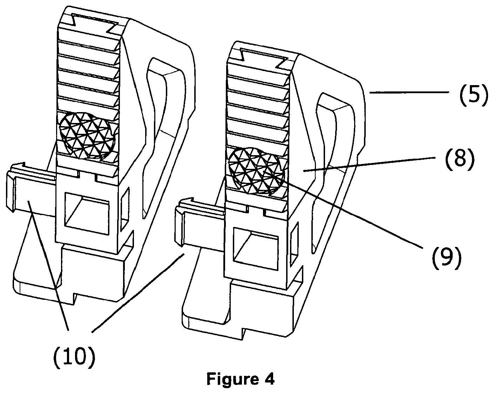

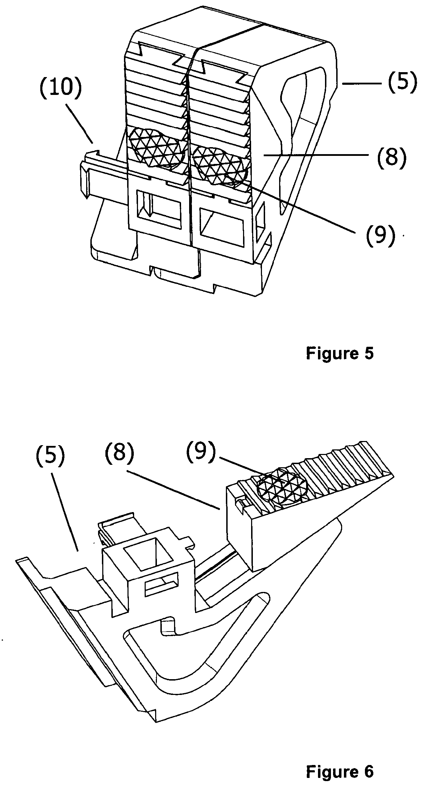

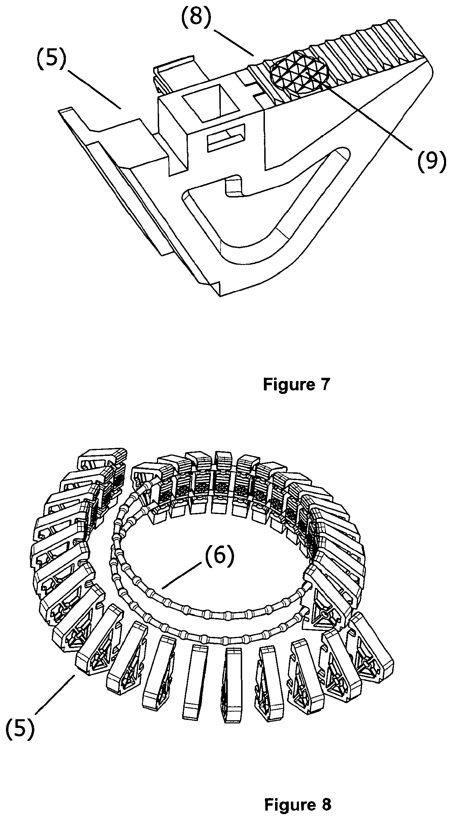

The coupling device is formed by:
a) main body in ductile iron, or another metal(1);
b) clamping ring(s) in ductile iron, or another material(2);
c) bolts, nuts and washers in stainless steel, or another material (3);
d) sealer(s) with incorporated "o-rings" in elastomer (4) ;
e) sealing and locking assembly, formed preferably by various types of gripper supports (5) that fit into each other (see Figures 4 and 5), or, alternatively, linked by a ribbed rubber ring (6, see Figure 8), and forming a closed ring (7), which, in turn, received the grippers (8) with a conical and sliding support (see Figures 6 and 7), and the grippers have tempered and zinc-coated milled rivets (9).

The locking and sealing is obtained through the coupling of the "sealing and locking assembly" between the ring (2) and the body (1) with tilted supports, thus obtaining the deflection/reduction of the interior diameter until we reach the external diameter of the pipe.

Sealing is done through a sealing ring fitted with "o-rings" (4), mounted onto the closed ring built with the gripper supports (5) which will slide until it is pressed over the pipe.

Locking is done through the tempered and zinc-coated milled rivets (9), inlaid in the conical grippers (8) which then are adjusted and lock onto the pipe. When there is an axial internal pressure, the pipe tries to move, which makes the grippers (8) locked onto the pipe through the milled rivets (9), slide over the gripper support guides (5). When they slide, the grippers (8) move on the guided conical supports, which, in turn, will reduce the diameter, i.e., the more the pipe tries to move out, the greater the clamping effect over the pipe will be, thus guaranteeing safety and reliability.

The sealing and locking assembly is formed by the elements mentioned in e), and they allow a facilitated use as the open angle of the gripper support (5) provides for reduced torque values during the manoeuvre operations, associated to the fact that the gripper (8) has a guided sliding movement so that in the event of a rotation movement, the grippers will not become detached. In its turn, given its characteristics and building material, the milled rivet (9), will allow a higher number of cycles without changing its characteristics.

In the alternative embodiment of this invention, the grippers (8) are interconnected by means of one or more ribbed elastomer rings (6), which fit into the grippers (8) (see Figure 8).

The shape of the support (5) was designed and developed with a tilt, so that if there are any movement is the part after it is assembled that reduce the clamping force, this tilt will allow a reduction of the diameter of the locking assembly to cause a new clamping increase in the pipe.

The profile of the sealer was developed to enable a perfect sealing effect in various pipe diameters that have different types of ruggedness, deflections and ovalizations.

One of the advantages of this invention is that it can be used to connect pipes made of different materials (steel, PVC, guided PVC, PVC-U or non-plastic polyvinyl chloride pipes, and polyethylene, ductile iron and asbestos cement pipes, among others). It also has the advantage of being used between pipes with different diameters and to allow a deflection up to 8° in the symmetry axle for pipes with maximum diameters, and this deflection can be greater for lower diameter pipes.

### Description of Figures

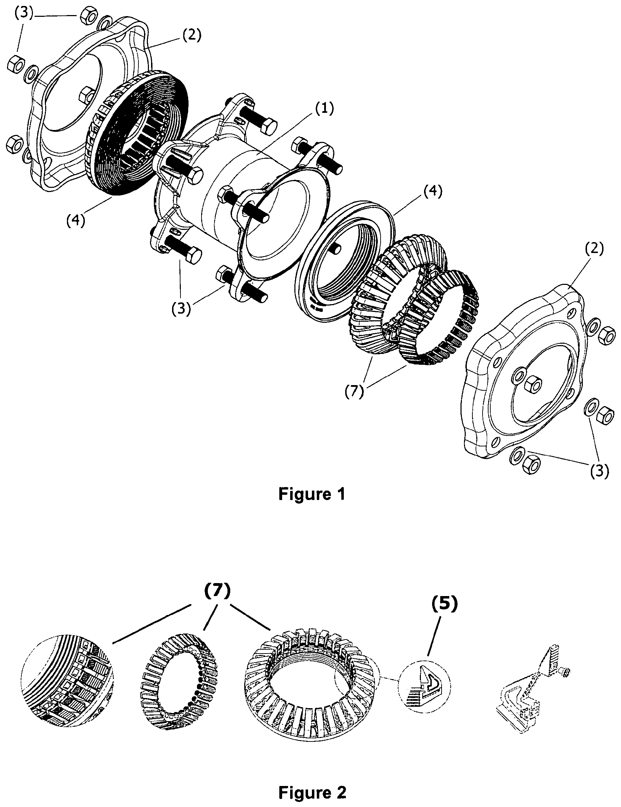

**Figure 1** *-* Shows an overview of the joint's components and their layout, including the main body (1), the rings (2), the bolts, nuts and washers (3), the sealers (4) and the sealing and locking assembly;
**Figure 2** - Shows an overview and the details of the gripper supports (5), placed in a ring (7) (without a ribbed ring).

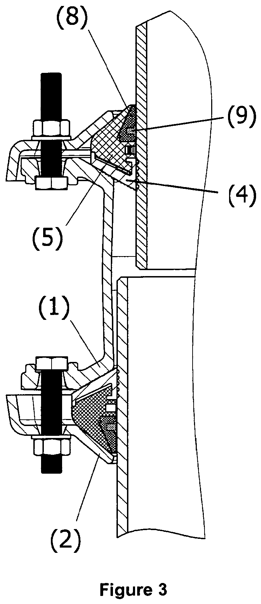

**Figure 3** - Shows an overview of the section drawing of how the joint locks onto a pipe, showing several components, namely the gripper (8) and the rivet (9), in addition to the gripper support (5), the sealer (4), the metal body (1) and the ring (2).
**Figure 4** - Shows an overview of two gripper supports (5) and how they fit laterally through locking tabs with the tolerance section (10) (without the ribbed ring), showing the gripper (8) and the rivet (9).
**Figure 5** - Shows an overview of two gripper supports (5), fitted laterally through locking tabs with the tolerance section (10) (without the ribbed ring), and once again showing the gripper (8) and the rivet (9).
**Figure 6** - Shows an overview of how the gripper (8) slides on a support (5) (without the ribbed ring), and also showing the rivet (9).
**Figure 7** - Shows an overview of a gripper (8) fitted into a gripper support (5) (without the ribbed ring), and once again showing the rivet (9).
**Figure 8** - Shows an overview of how the grippers (5) fit into the ribbed rings (6), in the alternative implementation of the invention.

## Claims

1. Multimaterials joint with locking grippers, comprising one or more ends for the insertion of pipes, and including the following components:
a) main body, in ductile iron (1), or another metal;
b) clamping rings (2), in ductile iron, or another metal;
c) bolts, nuts and washers (3) in stainless steel, or another metal;
d) sealers fitted with "o-rings" in elastomer (4);
e) sealing and locking assembly, formed by various gripper supports (5) connected to each other and forming a closed ring (7), which receives the grippers (8) with conical and sliding support;
f) tempered and zinc-coated milled rivets (9), in steel or another metal, included in the grippers (8) .

2. Multimaterials joint with locking grippers, according to claim 1, **characterized in that** the gripper supports (5) are connected by locking tabs (10) and comprising a coupled tolerance space within the gripper support (5).

3. Multimaterials joint with locking grippers, according to claim 1, **characterized in that** the coupling between the gripper supports (5) is carried out by at least one ribbed ring (6) and comprising a coupled tolerance space within the gripper support (5).

4. Multimaterials joint with locking grippers, according to claims 2 and 3, **characterized in that** the coupling between the gripper supports (5) is carried out in a transversal direction to the effort caused by the pipe traction

5. Multimaterials joint with locking grippers, according to claims 2 and 3, **characterized in that** the coupling between the gripper supports (5) is carried out by means of locking tabs (10) at a level very close to the external diameter of the pipe, and the distance from the external diameter of the pipe is between 1.5mm and 2.5mm.

6. Multimaterials joint with locking grippers, according to claims 2 and 3, **characterized in that** the coupling between the gripper supports (5) is protected from the external environment by means of sealers (4), thus avoiding the presence of dirt that hinders its proper operation.

7. Multimaterials joint with locking grippers, according to claims 2 and 3 **characterized in that** the gripper support (5) has an angle superior to 45° in the area matching the ring (2).

8. Multimaterials joint with locking grippers, according to the previous claims 2 and 3, **characterized in that** the gripper support (5) has a cavity to house and fix in two axles of the gripper (8), allowing its (8) movement in one single axle, and guaranteeing the fixation of the gripper (8) onto the gripper support (5), even when pipes vibrate or move.

9. Multimaterials joint with locking grippers, according to claim 8, **characterized in that** it includes a gripper (8) with guided and sliding conical fitting in the gripper support (5).

10. Multimaterials joint with locking grippers, according to a claim 9, **characterized in that** the gripper (8) that includes a milled rivet (9) inlaid in the gripper (8), that works as a traction element and which does not detach itself from the gripper (8), nor become damaged when it is subject to traction efforts such as those occurring during intense vibration.

11. Multimaterials joint with locking grippers, according to claim 8, **characterized in that** the grippers (8) operate, slide over the gripper support (5) and react to traction independently from each other.

12. Multimaterials joint with locking grippers, according to claims 2 and 3, **characterized in that** the bolts, nuts and washers (3) are used to hold the rings (2) to the main body of the joint (1).

13. Multimaterials joint with locking grippers, according to claim 12, **characterised in that** each ring (7) formed by the gripper supports (5) is locked together with the sealer (4) between the ring (2) and the main body of the joint (1).
